# EUROPEAN PATENT SPECIFICATION

(11) **EP 1 426 595 B1**
(45) Date of publication and mention of the grant of the patent: **30.07.2008**
(21) Application number: 03257384.2
(22) Date of filing: 24.11.2003
(51) Int. Cl.: F02D 41/26, G06F 11/16, H04L 12/56, H04J 3/06, H04J 4/00

(54) **Apparatus for and method of transferring data**
Verfahren und Gerät zur Übertragung von Daten
Méthode et appareil de transfert de données

(30) Priority: 02.12.2002 GB 0228110
(43) Date of publication of application: 09.06.2004
(73) Proprietor: Goodrich Control Systems Ltd, Luton, Bedfordshire LU1 3LU (GB)
(72) Inventor: Green, Paul Bernard, Solihull, Warwickshire B95 6AS (GB)
(74) Representative: Beck, Simon Antony

(56) References cited:
- EP-A1- 0 602 282
- JP-A- 58 094 294

## Description

The present invention relates to an apparatus for and method of transferring data. In particular the present invention enables data to be kept coherent such that where multiple measurements should come from a short time frame they are kept together and such that a process using this data does not use some "new" data in combination with some "old" data.

There is often a need to ensure that data provided by a measurement system which may work asynchronously is provided within a correct context to a data processor. Thus, in order to correctly calculate a parameter such as engine speed, a data processor might need two input values which correspond to the same period of time. However given that the measurements of these input values may be updated in an asynchronous manner the data processor may read the first measurement into its memory and whilst it is doing this the second measurement may be updated and hence the first and second measurements no longer belong to the same time frame. A similar situation may arise between control channels in a system having redundancy where it is necessary to ensure that data values which pass between one channel and the other belong to the same time frame.

Attempts have been made to overcome this timing problem, for example, by associating data packets with a header such that all the data associated with a particular header can be regarded as being contemporaneous.

As disclosed in EP 0 602 282.

According to a first aspect of the present invention there is provided a data transfer apparatus for controlling the provision of data to a data processor where the data comprises at least two data items having a predetermined temporal relationship, the apparatus comprising:
a first buffer N items deep for receiving data from sources of data and including N markers to indicate that a data item associated with the marker has been modified, where N is an integer; and
a data flow controller responsive to the markers and to a data association instruction specifying the data items which have a temporal relationship such that the data flow controller only allows a group of data items having a predetermined temporal relationship to be read from the first buffer when the items in the group satisfy the predetermined temporal relationship.

Preferably the predetermined temporal relationship is that all of the items in the group are near instantaneous or that they all belong to a single read cycle or measurement time frame.

Preferably the data transfer apparatus further comprises a second buffer and a data item is transferred from the first buffer to the second buffer only when the data item satisfies any temporal constraints associated with it.

Advantageously the second buffer includes M markers which indicate when the data item associated with a particular marker is modified. The markers in the first and second buffers may be in the form of single bits, which may be regarded as update bits, which are set when data is written to the buffer and reset when data is read from the buffer. Preferably M and N are equal.

Preferably data having a temporal constraint can only be transferred from the first buffer to the second buffer if all the context sensitive data in the first buffer has been collected from the data sources.

Preferably data having a temporal constraint can only be transferred from the first buffer to the second buffer if the corresponding data in the second buffer has not been read at all by a process (a sink process) utilising that data or all of the items sharing a temporal constraint have been read by the sink process. Thus the temporally constrained items within a group cannot be updated if some of the members of the group have been read by the sink process but others have not. This can be ensured by examining the status of the markers of the members of the group of temporally constrained data.

Advantageously the items of data are assigned specific addresses within the first and second buffers. Thus, in the context of an aeronautical engine management system, the speed of a high speed turbine spool will always be written to the same position within the first buffer. Similarly, that particular item of data when transferred to the second buffer will always be written to the same position.

Preferably items of data which have a predetermined temporal significance with one another occupy contiguous addresses within the buffers. This has the advantage that the beginning of a group of items which have the predetermined temporal relationship can be marked with a marker, such as a "1" written into a sensitivity register specifying the contextual relationship between items in the first or second buffers, and similarly the end of such a group may be flagged with another marker, such as "1" being written into the sensitivity register. This has the advantage that all items between the beginning and end markers can be flagged with a different marker, such as zero, but searched for to correctly assign them to their group.

According to a second aspect of the present invention there is provided a method of controlling the provision of data to a data processor wherein the data comprises a plurality of data items, at least two of which have a temporal relationship, the method comprising the steps of:
a. Storing the data in a first storage area and updating a marker associated with an item of data when each item of data is modified; and
b. Comparing the status of the markers with a data association instruction specifying which items of data have a temporal relationship to determine a group of temporally related data items, and only allowing those data items in the group to be read from the first storage area when all the items in the group satisfy the temporal relationship.

The present invention will further be described, by way of example, with reference to the accompanying drawings, in which:
Figure 1 schematically illustrates a engine controller including a data transfer apparatus constituting an embodiment of the present invention;
Figure 2 schematically illustrates the contents of the first and second buffers of the data flow control apparatus;
Figure 3 schematically illustrates the contents of the sensitivity register; and
Figure 4 schematically illustrates a format of data supplied from data sources.

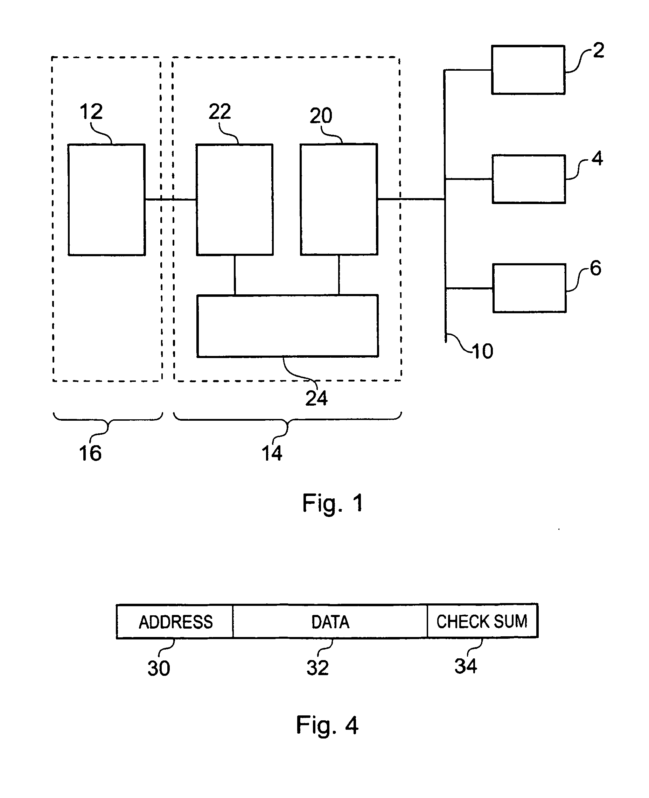

The arrangement shown in Figure 1 comprises a plurality of data sources 2, 4, and 6 which may be sensors, for example engine speed or engine temperature sensors and their associated data processing and transfer devices which enable the sensors to communicate with an engine controller 16 via a shared bus 10. Other devices such as other data processors may also be connected to the bus 10 and may wish to transfer information to the data processor 12 of the controller 16 which is arranged to receive the various sources of information and to process it to perform a specific function, such as to control the operation of an aeronautical gas turbine engine.

In order to correctly derive measurements of performance of the engine, the controller 16 may need to rely on various measurements being made within the same time frame, or within a measurement cycle of one of the data sources 2, 4 and 6. Thus, suppose that the data source 2 measures the rotational speeds of a high speed spool and a low speed spool of a gas turbine engine. The data processor 12 may need to know both of these measurements in order to correctly control the engine. The data source 2 may make the measurement of the high speed spool speed and the low speed spool speed within a given time frame and may then move on to perform other tasks before eventually returning to make subsequent speed measurements.

However, if the device 2 merely wrote its data into a single buffer where it could be held for use by the controller 16, then there is a risk that the controller 16 might read a first one of the speed measurements from the single buffer, but before it had read the second speed measurement the data source 2 might update its indication of speed measurements into the buffer. Thus the measurement of high speed spool speed and low speed spool speed would no longer come from the same time frame, and hence the data would not be reliable.

The present invention includes a data flow control apparatus 14 which buffers the data from the data sources 2, 4 and 6 and ensures that those items which are temporally sensitive, also known as context sensitive, are kept together such that context sensitive data is only made available to the data processor en-mass.

The flow control apparatus comprises a first buffer 20 arranged to receive data from the data sources 2, 4 and 6 and a second buffer 22 which receives data from the first buffer 20 and which makes the data available for use by the data processor 12. A data flow controller 24 monitors the content of the first and second buffers 20 and 22, respectively, in order to ensure that data can only be transferred from the first buffer 20 to the second buffer 22 when all contextually sensitive data within a data group has been collected, and the data processor has either read all or none of the contextually sensitive data in the second buffer.

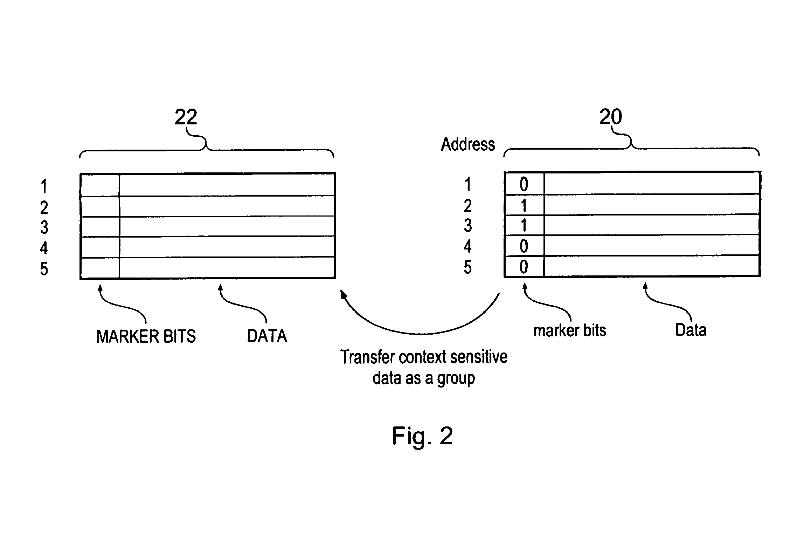

An exemplary format of the data packet is shown in Figure 4. The data packet comprises a data field 32 in association with an address field 30 which identifies the location in the buffer 20 that the data 32 should be stored in. A check sum 34 is provided in order to ensure that corruption has not occurred within the address field or data field of the transmitted data. Provided a check sum as calculated by the buffer 20 when it receives the address and data information 30 and 32, respectively, matches the check sum 34 then it can be assumed that no corruption has occurred and the data can be passed to the correct address in the input buffer 20. Each of the data sources 2, 4 and 6 may operate asynchronously so data may arrive at the first data buffer 20 in any order. The buffer 20 is arranged, as shown in Figure 2, to include an update bit (or marker bit) within each data field.

If we assume that we start with an empty buffer 20, then supposing that a data item is written to address 2, then the update bit associated with address 2 will be set from a zero to a 1. Similarly, if data is subsequently written to address 3 then the update bit for address 3 will also be set from a zero to a 1. This is the state illustrated in Figure 2.

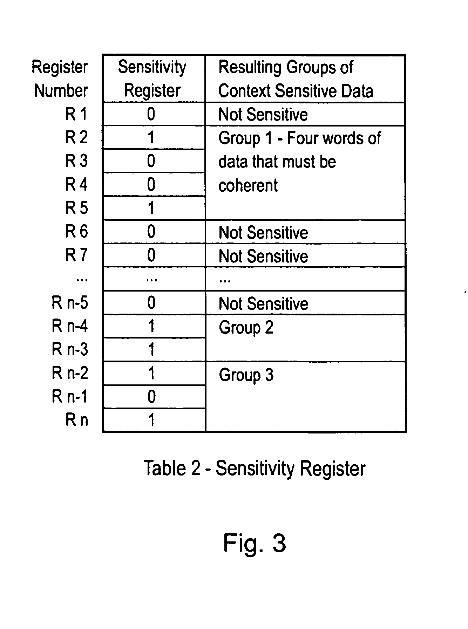

The data flow controller 24 monitors the status of the update bits in the register 20 and also compares the status of the update bits to a sensitivity register. An example of a sensitivity register is shown in Figure 3. For each address or register number the sensitivity register is loaded with a value zero or one. Starting from address 1, the first entry in the sensitivity register is zero which shows that the data which would normally be allocated to address 1 in the register 20 is not context or temporally sensitive and hence can be read by the data processor as and whenever it wants and consequently can be immediately transferred from the first buffer 20 to the second buffer 22 as and when the data is updated. However, the sensitivity register is set to a one at address 2. This marks the commencement of a group of data items which are temporally related and hence which can only be made available to the data processor 12 en-mass. The third address in the sensitivity register is set to zero and hence this shows that the data item which would normally go to address 3 is associated with the data item which belongs to address 2. Similarly the sensitivity register is set to zero at address 4 which also indicates that the data item which belongs to address 4 is contextually related to the items that belong to address 2 and 3. At address 5 the sensitivity register is set to a one which functions as the end marker for the first group of the contextually sensitive data. Thus the data belonging to addresses 2 to 5 inclusive must be made available to the data processor only as a group. It can be seen that further groups can also be defined and Figure 3 shows an example where group 2 comprises two contextually sensitive data items and group 3 comprises three contextually sensitive items and groups 2 and 3 are arranged contiguously within the buffers. The coding scheme chosen still, however, allows for the members of each group to be uniquely identified.

Returning to our example, the data flow controller 24 monitors the activity in the registers and once addresses 2 to 5 of the buffer 20 have all been updated the data contained therein is transferred from the first buffer 20 the second buffer 22, again occupying addresses 2 to 5. The update bits for addresses 2 to 5 in the first buffer 20 are reset to zero and the update bits 2 to 5 in the second buffer 22 are set to 1.

If the data processor reads any of the data in addresses 2 to 5 of the second buffer 22 then the associated update bit is set to zero. Furthermore, no alteration may be made to the addresses 2 to 5 of the second buffer 22 until each and every one of them has been read from. This ensures that the data processor 12 processes a set of context sensitive data without data from one time or measurement cycle being mixed with data from a different time or measurement cycle.

If, however, the data sources 2, 4 and 6 had written new data to each of the addresses 2 to 5 in the first buffer 20 before any of the data 2 to 5 in the second buffer 22 had been read then the data transfer controller 24 would allow the updated information from addresses 2 to 5 to overwrite the corresponding items in the second buffer 22.

The data flow controller 24 is also arranged to ensure the data cannot be transferred from the first buffer 20 to the second buffer 22 if one item of data in a group has been updated more than other items of data in the group. To prevent the or each source process that supply data partially updating the data before it is transferred certain constraints are applied. The sink process (ie processes that use the data) must be allowed enough time to read a block of coherent data but not enough time for the data to be updated more than once. It should be noted that this read time starts when the sink process reads the first word of data, and not when the data is received. That is the data can be updated any number of times before the sink process reads it, however once the sink process has started reading the data, it must complete reading it before the source process can overwrite relevant data to which the transfer constraints are applied. Thus there must be a gap between successive updates of each coherent block of data (by the source) and the total read time by the sink process must be less than this (also allowing a short time for the transfer to take place).

Coherent data items should always arrive in order and a data item arriving out of order will be prevented from updating.

However the system designer has choices to deal with the data in the event that an attempt is made to partially update a block of context sensitive data. Referring back to Figure 3, it can be seen that items 2 to 5 of the register are contextually sensitive and hence should all belong to the same time frame.

Starting from an initially empty register, we wait for each of the items 2 to 5 to be updated just once, and when this has occurred the block can be marked for transfer to the second buffer 22.

If however, we expect the data to arrive in order, e.g. Item 2, item 3, item 4 then item 5 and for example item 2 attempts to update again before item 5 updates, then the designer may choose to allow item 2 to be updated and the items 3 and 4 to be overwritten - hence a new update cycle is initiated before the previous one is completed.

Alternatively in the event that such data items arrive out of order and the overall data system is configured such that this should not happen, the data flow controller may be authorised to issue a "refresh" instruction to the data sources asking them to recommence a measurement sequence. This technique may be of practical benefit for large data buffers.

A further problem may arise if a check sum test is failed. It will then not be possible to determine whether the data or the address is incorrect and hence it is desirable to reset all of the data in the first buffer 20 and to clear all of the update bits.

If the first buffer 20 is regarded as a receive buffer, since it receives data from the data sources 2, 4 and 6, and the second buffer 22 is regarded as a sink buffer, because it provides data to a sink process. It can be seen that the data flow controller 24 allows data to be transferred from the receive buffer to the sink buffer when:
a. Data items have been updated and are not marked as context sensitive;
   or
b. Data items are context sensitive and all of the data items in a group in the receive buffer have been updated AND the data processor 12 has either read all or none of the items in that group in the sink buffer.

The sensitivity register may need to be updatable in order to allow for future updates of the engine management system. It is therefore advantageous that the sensitivity register be rewriteable and that the logic implemented by the data flow controller 24 be able to cope with such updates.

The processes occurring within the data flow controller 24 may be performed in combinational logic or by an algorithm. An exemplary algorithm which may also be implemented in combinatorial logic, is shown below,
where
+ = Logical OR, & = Logical AND, ⊕ = Logical Exclusive OR, ~ = Logical NOT
S<x> is the sensitivity bit for data item 'x'
S<x-1> is the sensitivity bit for data item 'x-1'
R<x> is the receive buffer update bit for data item 'x'
U<x> is the sink buffer update bit for data item 'x'
Buffer size of 'n' words.
XOR<0>= S<0>
XOR<x>= S<x> ⊕ XOR<x-1>
TRUE for all but the last item in a context sensitive group.
SENSITIVE<x>= XOR<x> + S<x>
TRUE if data <x> is context sensitive.
FIRST<x> = XOR<x> & S<x>
TRUE if data <x> is the first context sensitive data item in a context sensitive group.
LAST <x> = ~XOR <x> & S <x>
TRUE if data <x> is the last context sensitive data item in a context sensitive group.
RXUPDATE<n> = R<n> & (~SENSITIVE<n> + LAST<n> + ( SENSITIVE<n> & ~LAST<n>))

Since n is the last item on the list then either SENSITIVE<n> or last <n> must be true and equation becomes RXUPDATE<n>=R<n>
RXUPDATE<x> = R<x> & (~SENSITIVE<x> + LAST<x> + ( SENSITIVE<x> & ~LAST<x> & RXUPDATE<x+1>))
TRUE if data <x> is updated in the receive buffer, and if part of a context sensitive group all other data items in the same group are also updated.
READ<x>= SENSITIVE<x> & ((READ<x-1> & ~FIRST<x>) +~U<x>)
TRUE if data item 'x' or a previous data item in the same context sensitive group has been read from the sink buffer by the sink process.
UNREAD<x>= (U<x> & LAST<x>) + (XOR<x> & UNREAD<x+1>
TRUE if data item 'x' or a later data item in the same context sensitive group has not been read from the sink buffer by the sink process. (Note that the value of UNREAD<x+1> for the last data item n is 'don't care' because XOR<n> is always FALSE)
READING<x>= READ<x> & UNREAD<x>
TRUE if the sink process has read some, but not all, of the data items of a context sensitive group in the sink buffer.
TRANSFER<x>= ~READING<x> & RXUPDATE<x>
TRUE if the data word <x> may be transferred at the next update period i.e.
- Data Items that have been updated and are not marked as context sensitive.
- Data Items which are context sensitive provided that:-
   All of the data items in the group have been updated in the receive buffer.
      AND
   The sink process has either read all or none of the group from the sink buffer.

If the implementation of the invention is such that it can be assured that the items in a group should update sequentially then the update of a P_{TH} item in a group can be inhibited if the (P-1)_{TH} item of the group has not updated.

It is thus possible to provide a method of and apparatus for controlling the transfer of data which utilises a double buffering arrangement and transfer control logic to ensure that temporally related measurements are kept together and cannot become mixed up with measurements from a preceding or subsequent time frame.

## Claims

1. A data transfer apparatus (14) for controlling the provision of data to a data processor (12) where the data comprises at least two data items (R2, R3, R4, R5) having a predetermined temporal relationship, the apparatus **characterised by**:
a first buffer (20) for receiving data from sources of data (2, 4, 6) and including markers to indicate that a data item associated with the marker has been modified;
and a data flow controller (24) responsive to the markers and to a data association instruction specifying the data items which have a temporal relationship such that the data flow controller (24) only allows a group of data items having a predetermined temporal relationship to be read from the first buffer when the items in the group satisfy the predetermined temporal relationship.

2. A data transfer apparatus as claimed in claim 1, **characterised by** further comprising a second buffer (22), and wherein a data item is transferred from the first buffer (20) to the second buffer (22) only when the data item satisfies any temporal constraints associated with it.

3. A data transfer apparatus as claimed in claim 2, **characterised in that** the second buffer includes markers to indicate when a data item associated with the marker is modified.

4. A data transfer apparatus as claimed in claim 1, 2 or 3, **characterised in that** the markers of the first buffer (20) are set when an associated data item is written to the buffer and cleared when the associated data item is read from the first buffer.

5. A data transfer apparatus as claimed in claim 3, **characterised in that** the markers of the second buffer (22) are set when an associated data item is written to the second buffer and cleared when the associated data is read from the second buffer.

6. A data transfer apparatus as claimed in any one of the preceding claims, **characterised in that** specific data items have predetermined places reserved within the first buffer.

7. A data transfer apparatus as claimed in claim 2, **characterised in that** specific data items have predetermined places within the second buffer.

8. A data flow controller as claimed in claim 6, in which the data items which are temporally associated with each other form a group of data items, and data items which form a group have contiguous positions within the first buffer.

9. A data transfer apparatus as claimed in claim 2 in which the transfer of a group of temporally related items from the first buffer to the second buffer is inhibited if only some of the corresponding items in the second buffer have been read by a sink process.

10. A data transfer apparatus as claimed in claim 2, **characterised in that** the first buffer is N items deep and has N markers, the second buffer is M items deep and has M markers, and N equals M.

11. A method of controlling the provision of data to a data processor wherein the data comprises a plurality of data items, at least two of which have a temporal relationship, the method comprising the steps of:
a. Storing the data in a first storage area and updating a marker associated with an item of data each time that item of data is modified; and
b. Comparing the status of the markers with a data association instruction specifying which items of data have a temporal relationship to determine a group of temporally related data items, and only allowing those data items in the group to be read from the first storage area when all the items in the group satisfy the temporal relationship.

12. A method as claimed in claim 11, wherein an item of data is transferred to a second storage area when the item of data satisfies any temporal constraints associated with it.

13. A method as claimed in claim 12, wherein the items of data in the second storage area are associated with markers.

14. A method as claimed in claim 11, 12 or 13, wherein the markers are set when an associated item of data is written to and reset when the associated item of data is read.

## Patentansprüche

1. Datenübertragungsvorrichtung (14) zum Steuern der Bereitstellung von Daten an einen Datenprozessor (12), wobei die Daten mindestens zwei Datenelemente (R2, R3, R4, R5) mit einer vorbestimmten zeitlichen Beziehung umfassen, wobei die Vorrichtung **gekennzeichnet ist durch**:
einen ersten Pufferspeicher (20) zum Empfangen von Daten von Datenquellen (2, 4, 6) und Marker zum Anzeigen, dass ein dem Marker zugeordnetes Datenelement modifiziert wurde;
und einen Datenflusscontroller (24), der auf die Marker und auf einen Datenassoziationsbefehl, der die Datenelemente spezifiziert, die eine zeitliche Beziehung aufweisen, derart reagiert, dass der Datenflusscontroller (24) nur zulässt, dass eine Gruppe von Datenelementen mit einer vorbestimmten zeitlichen Beziehung von dem ersten Pufferspeicher gelesen wird, wenn die Elemente in der Gruppe die vorbestimmte zeitliche Beziehung erfüllen.

2. Datenübertragungsvorrichtung nach Anspruch 1, **dadurch gekennzeichnet, dass** sie weiterhin einen zweiten Pufferspeicher (22) umfasst, und wobei ein Datenelement von dem ersten Pufferspeicher (20) nur an den zweiten Pufferspeicher (22) übertragen wird, wenn das Datenelement jegliche zeitlichen Einschränkungen, die damit assoziiert sind, erfüllt.

3. Datenübertragungsvorrichtung nach Anspruch 2, **dadurch gekennzeichnet, dass** der zweite Pufferspeicher Marker zum Anzeigen, wenn ein dem Marker zugeordnetes Datenelement modifiziert ist, enthält.

4. Datenübertragungsvorrichtung nach Anspruch 1, 2 oder 3, **dadurch gekennzeichnet, dass** die Marker des ersten Pufferspeichers (20) gesetzt werden, wenn ein zugeordnetes Datenelement auf den Pufferspeicher geschrieben wird, und gelöscht werden, wenn das zugeordnete Datenelement von dem ersten Pufferspeicher gelesen wird.

5. Datenübertragungsvorrichtung nach Anspruch 3, **dadurch gekennzeichnet, dass** die Marker des zweiten Pufferspeichers (22) gesetzt werden, wenn ein zugeordnetes Datenelement auf den zweiten Pufferspeicher geschrieben wird, und gelöscht werden, wenn die zugeordneten Daten von dem zweiten Pufferspeicher gelesen werden.

6. Datenübertragungsvorrichtung nach einem der vorhergehenden Ansprüche, **dadurch gekennzeichnet, dass** spezifische Datenelemente vorbestimmte, reservierte Plätze in dem ersten Pufferspeicher haben.

7. Datenübertragungsvorrichtung nach Anspruch 2, **dadurch gekennzeichnet, dass** spezifische Datenelemente vorbestimmte Plätze in dem zweiten Pufferspeicher haben.

8. Datenflusscontroller nach Anspruch 6, wobei die Datenelemente, die miteinander zeitlich assoziiert sind, eine Gruppe von Datenelementen bilden und Datenelemente, die eine Gruppe bilden, fortlaufende Positionen in dem ersten Pufferspeicher haben.

9. Datenübertragungsvorrichtung nach Anspruch 2, wobei die Übertragung einer Gruppe zeitlich zusammenhängender Elemente von dem ersten Pufferspeicher an den zweiten Pufferspeicher blockiert wird, falls nur einige der entsprechenden Elemente in dem zweiten Pufferspeicher mittels eines Versenkungsverfahrens gelesen wurden.

10. Datenübertragungsvorrichtung nach Anspruch 2, **dadurch gekennzeichnet, dass** der erste Pufferspeicher N Elemente tief ist und N Marker aufweist, der zweite Pufferspeicher M Elemente tief ist und M Marker aufweist und N gleich M ist.

11. Verfahren zum Steuern der Bereitstellung von Daten an einen Datenprozessor, wobei die Daten mehrere Datenelemente umfassen, von denen mindestens zwei eine zeitliche Beziehung aufweisen, wobei das Verfahren die folgenden Schritte umfasst:
a. Speichern der Daten in einem ersten Speicherbereich und Aktualisieren eines einem Datenelement zugeordneten Markers jedes Mal, wenn dieses Datenelement modifiziert wird; und
b. Vergleichen des Status der Marker mit einem Datenassoziationsbefehl, der spezifiziert, welche Datenelemente eine zeitliche Beziehung aufweisen, um eine Gruppe von zeitlich zusammenhängenden Datenelementen zu bestimmen und das Lesen dieser Datenelemente der Gruppe von dem ersten Speicherbereich nur zuzulassen, wenn alle Elemente in der Gruppe die zeitliche Beziehung erfüllen.

12. Verfahren nach Anspruch 11, wobei ein Datenelement an einen zweiten Speicherbereich übertragen wird, wenn das Datenelement jegliche zeitlichen Einschränkungen, die mit ihm assoziiert sind, erfüllt.

13. Verfahren nach Anspruch 12, wobei die Datenelemente in dem zweiten Speicherbereich Markern zugeordnet sind.

14. Verfahren nach Anspruch 11, 12 oder 13, wobei die Marker gesetzt werden, wenn ein zugeordnetes Datenelement geschrieben wird, und rückgesetzt werden, wenn das zugeordnete Datenelement gelesen wird.

## Revendications

1. Appareil de transfert de données (14) pour contrôler la fourniture de données à un processeur de données (12) dans lequel les données comprennent au moins deux éléments de données (R2, R3, R4, R5) ayant une relation temporelle prédéterminée, l'appareil étant **caractérisé en ce que** :
un premier tampon (20) pour recevoir des données à partir de sources de données (2, 4, 6) et incluant des marqueurs pour indiquer qu'un élément de données associé au marqueur a été modifié ;
et un contrôleur de flux de données (24) réagissant aux marqueurs et à une instruction d'association de données spécifiant les éléments de données qui ont une relation temporelle telle que le contrôleur de flux de données (24) n'autorise qu'un groupe d'éléments de données ayant une relation temporelle prédéterminée à être lu dans le premier tampon lorsque les éléments du groupe satisfont à la relation temporelle prédéterminée.

2. Appareil de transfert de données selon la revendication 1, **caractérisé en ce qu'**il comprend en outre un second tampon (22) et dans lequel un élément de données est transféré depuis le premier tampon (20) dans le second tampon (22) seulement lorsque l'élément de données satisfait aux contraintes temporelles qui lui sont associées.

3. Appareil de transfert de données selon la revendication 2, **caractérisé en ce que** le second tampon inclut des marqueurs pour indiquer le moment où un élément de données associé au marqueur est modifié.

4. Appareil de transfert de données selon les revendications 1, 2 ou 3, **caractérisé en ce que** les marqueurs pour le premier tampon (20) sont définis lorsqu'un élément de données associé est écrit dans le tampon et effacé lorsque l'élément de données associé est lu dans le premier tampon.

5. Appareil de transfert de données selon la revendication 3, **caractérisé en ce que** les marqueurs du second tampon (22) sont définis lorsqu'un élément de données associé est écrit dans le second tampon et effacé lorsque les données associées sont lues dans le second tampon.

6. Appareil de transfert de données selon l'une des précédentes revendications, **caractérisé en ce que** des éléments de données spécifiques ont des emplacements prédéfinis réservés dans le premier tampon.

7. Appareil de transfert de données selon la revendication 2, **caractérisé en ce que** des éléments de données spécifiques ont des emplacements prédéfinis dans le second tampon.

8. Contrôleur de flux de données selon la revendication 6, dans lequel les éléments de données qui sont temporellement associés les uns aux autres forment un groupe d'éléments de données et où les éléments de données qui forment un groupe occupent des positions contiguës dans le premier tampon.

9. Appareil de transfert de données selon la revendication 2 dans lequel le transfert d'un groupe d'éléments temporellement liés du premier tampon vers le second tampon est inhibé si seulement certains éléments correspondants du second tampon ont été lus par un processus de réception (sink).

10. Appareil de transfert de données selon la revendication 2, **caractérisé en ce que** le premier tampon est profond de N éléments et a N marqueurs, le second tampon est profond de M éléments et a M marqueurs et N est égal à M.

11. Méthode de contrôle de la fourniture de données à un processeur de données dans lequel les données comprennent une pluralité d'éléments de données, dont au moins deux ont une relation temporelle, ce procédé comprenant les étapes consistant à :
a. Stocker les données dans une première zone de stockage et actualiser un marqueur associé à un élément de données à chaque fois que cet élément de données est modifié ; et
b. Comparer l'état des marqueurs avec une instruction d'association de données spécifiant quels éléments de données ont une relation temporelle pour déterminer un groupe d'éléments de données temporellement liés, et en ne permettant aux éléments de données du groupe d'être lus dans la première zone de stockage que lorsque tous les éléments dans le groupe satisfont à la relation temporelle.

12. Méthode selon la revendication 11, dans laquelle un élément de données est transféré dans une seconde zone de stockage lorsque l'élément de données satisfait aux contraintes temporelles qui lui sont associées.

13. Méthode selon la revendication 12, dans laquelle les éléments de données dans la seconde zone de stockage sont associés aux marqueurs.

14. Méthode selon les revendications 11, 12 ou 13, dans laquelle les marqueurs sont définis lorsqu'un élément de données associé est écrit et réinitialisé lorsque l'élément associé de données est lu.
